# EUROPÄISCHE PATENTANMELDUNG

(11) **EP 3 085 983 A1**
(43) Veröffentlichungstag der Anmeldung: **26.10.2016**
(21) Anmeldenummer: 15165097.5
(22) Anmeldetag: 24.04.2015
(51) Int. Cl.: F16D 65/853, B60T 5/00, F16D 65/12

(54) **LAMELLE FÜR EINE INDIREKT FLÜSSIGKEITSGEKÜHLTE REIBUNGSBREMSE**

(71) Anmelder: Ortlinghaus-Werke GmbH, 42929 Wermelskirchen (DE)
(72) Erfinder: Seeger, Herbert, 32547 Bad Oyenhausen (DE); Meller, Udo, 42929 Wermelskirchen (DE)
(74) Vertreter: Stenger Watzke Ring

(57) **Zusammenfassung**

Die Erfindung betrifft eine Lamelle (1) für eine indirekt flüssigkeitsgekühlte Reibungsbremse, mit einem Grundkörper (2) zur Bereitstellung zumindest einer Reibfläche, wobei der Grundkörper (2) zwei strömungstechnisch voneinander getrennte Kanäle (4, 5) zur Durchströmung mit flüssigen Kühlmitteln aufweist.

## Beschreibung

Die Erfindung betrifft eine Lamelle für eine indirekt flüssigkeitsgekühlte Reibungsbremse, mit einem Grundkörper zur Bereitstellung zumindest einer Reibfläche.

Gattungsgemäße Lamellen sind aus dem Stand der Technik bekannt, beispielsweise aus der GB 2 307 961 A. Solche Lamellen kommen bei Reibungsbremsen zum Einsatz. Reibungsbremse im Sinne der Erfindung meint auch eine Reibungskupplung. Eine gattungsgemäße Lamelle dient bei einer Reibungsbremse bzw. -kupplung als Reibelement zur Abbremsung oder Übertragung einer Drehbewegung. Bei einer Reibungsbremse sind mehrere Lamellen vorgesehen, wobei zumindest eine Lamelle drehfest mit einem ersten Teil und eine weitere Lamelle drehfest mit einem zweiten Teil verbunden ist. Durch axiales Zusammenpressen der Lamellen kommt es zu einem Reibschluss und zum Bestreben, die relative Drehgeschwindigkeit zwischen dem einen und dem anderen Teil auf null zu reduzieren.

Die Erfindung betrifft im Besonderen eine Lamelle für eine indirekt flüssigkeitsgekühlte, insbesondere ausschließlich indirekt flüssigkeitsgekühlte Reibungsbremse bzw. -kupplung. Die beim Schalten der Bremse entstehende Reibungswärme muss abgeführt werden. Dies kann auf verschiedenen Wegen realisiert werden, beispielsweise durch eine aktive Belüftung der Bremse mit Druckluft oder eine direkte Flüssigkeitskühlung durch sogenannten Nasslauf, d.h. ein direktes Laufen der Reibflächen in einer Kühlflüssigkeit wie Öl und oder dgl. Die Erfindung betrifft hingegen solche Lamellen, bei denen die Reibungswärme nicht (zumindest nicht ausschließlich) durch einen direkten Kontakt der Reibflächen mit einer Kühlflüssigkeit oder einem Kühlluftstrom abgeführt wird, sondern vielmehr indirekt durch Abführen der Reibungswärme durch einen inneren, gekapselten Abtransport mittels einer Kühlflüssigkeit.

Die GB 2 307 961 A schlägt eine Lamelle vor, welche einen spiralförmig verlaufenden Kanal für ein Kühlmittel bereitstellt. Der Kanal ist in einem Grundkörper ausgebildet, und zwar einseitig offen. Erst durch die Montage eines Reibbelags auf dem Grundkörper wird der Kanal geschlossen.

Wenngleich sich die bekannten Lamellen bewährt haben, besteht dennoch Verbesserungsbedarf. So soll die Kühlleistung weiter verbessert werden und zudem die Handhabung einer mit einer gattungsgemäßen Lamelle ausgestatteten Bremse bzw. Kupplung verbessert werden.

Es ist daher die **Aufgabe** der vorliegenden Erfindung, eine gattungsgemäße Lamelle insbesondere hinsichtlich der Kühlleistung und der Handhabung zu verbessern.

Zur **Lösung** schlägt die Erfindung vor, dass der Grundkörper zwei strömungstechnisch voneinander getrennte Kanäle zur Durchströmung mit flüssigen Kühlmitteln aufweist.

Erfindungsgemäß wird also vorgeschlagen, dass der Grundkörper der Lamelle über zwei Kanäle verfügt, welche strömungstechnisch nicht miteinander verbunden sind. Es kann insbesondere vorgesehen sein, dass jeder Kanal einen Einlass und einen Auslass aufweist. Die Kühlung einer erfindungsgemäßen Lamelle kann dadurch verbessert und insbesondere individuell ausgelegt werden. So ist es beispielsweise möglich, das Kühlmittel in dem einen Kanal mit einer höheren Strömungsgeschwindigkeit strömen zu lassen als in dem anderen Kanal. Auch ist es möglich, in beiden Kanälen hinsichtlich ihrer Eigenschaften unterschiedliche Kühlmittel zu verwenden. Darüber hinaus ermöglicht es die Erfindung, die beiden Kanäle im Gegenstrom mit Kühlmittel zu beaufschlagen. Hierdurch kann eine Vergleichmäßigung der Temperaturen am Grundkörper bzw. im Bereich der Reibfläche erreicht werden. Die Lebensdauer der Bremse sowie die erreichbare Bremskraft werden dadurch verbessert.

Der Grundkörper kann einstückig ausgebildet sein. Die Kanäle können insbesondere vollständig innerhalb des Grundkörpers verlaufen, so dass sie von außen nur durch einen Ein-/Auslass zugänglich sind. Die Kanäle können aber auch seitlich in den Lamellengrundkörper eingebracht sein, so dass sie erst durch Montage einer Reibbelags oder dergleichen geschlossen werden. Sofern der Grundkörper einstückig ausgebildet ist, ist dadurch synergetischer Weise gleichzeitig die Dichtheit der Kanäle sichergestellt. Es existieren keine Fugen, Spalte oder dgl., welche nach einem Zusammenfügen mehrere Einzelteile des Grundkörpers abgedichtet werden müssten.

Wenngleich ein in erfindungsgemäßer Weise ausgebildeter Grundkörper genau zwei strömungstechnisch voneinander getrennte Kanäle aufweisen kann, sind von der Erfindung auch Ausführungsformen umfasst, bei denen mehr als zwei strömungstechnisch voneinander getrennte Kanäle im Grundkörper vorgesehen sind.

Durch die erfindungsgemäße Lösung wird also die Kühlleistung bei einer Reibungsbremse verbessert. Dies bringt den Vorteil mit sich, dass mit der erfindungsgemäßen Lamelle eine trocken laufende Bremse betrieben werden kann, ohne dass die Betriebssicherheit durch Überhitzen oder dergleichen gefährdet wäre. Trocken laufende Bremse meint, dass die kein direkter Kontakt zwischen den Reibflächen der Lamellen und einer Kühlflüssigkeit wie einem Kühlöl erforderlich ist.

Bei den aus dem Stand der Technik bekannten trocken laufenden Bremsen muss aber beispielsweise eine aktive Belüftung mittels Druckluftgebläse vorgesehen sein. Aber auch dies schützt bei den bekannten Bremsen nicht immer sicher vor Problemen wie Überhitzung und dergleichen.

Eine erfindungsgemäße Lamelle schafft hier Abhilfe, da durch die besonders effektive Kühlleistung erstmals auf einen Nasslauf vollständig verzichtet werden kann bei gleichzeitiger Gewährleistung eines sicheren Betriebs.

Dies bringt beispielsweise den Vorteil mit sich, dass ein maritimer Einsatz einer mit der erfindungsgemäßen Lamelle ausgerüsteten Bremse ermöglicht wird. Dies war mit den bekannten Bremsen in dieser Form nicht möglich. Die Verwendung von bekannten nass laufenden Bremsen ist nämlich bei einer maritimen Anwendung prinzipbedingt zu vermeiden. Bei einer Undichtigkeit im System könnte das Kühlöl austreten und Umweltprobleme bereiten. Die Verwendung von aktiv luftgekühlten Bremsen ist ebenfalls nachteilig, da zusätzliche Mittel für die Erzeugung des erforderlichen Luftstroms vorgesehen sein müssen.

Insofern können mit einer erfindungsgemäßen Lamelle mögliche Umweltprobleme von vorn herein umgangen werden und zugleich eine besonders sichere und kostengünstige Bremse für maritime Anwendungen geschaffen werden.

Ein weiterer Aspekt kommt hinzu. Die bekannten nasslaufenden Bremsen weisen eine nicht unerhebliche Verlustleistung auf, welche aus der Ölscherung durch die rotierenden Lamellen resultiert. In synergetischer Weise wird diese Verlustleistung bei Verwendung einer erfindungsgemäßen Lamelle weitestgehend verhindert. Es wird somit der Wirkungsgrad eines mit der erfindungsgemäßen Lamelle ausgestatteten Antriebssystems verbessert bei gleichzeitiger Verbesserung der Kühlleistung und der wirksamen Umgehung von möglichen Umweltproblemen.

Die beiden Kanäle können in radialer Richtung des Grundkörpers voneinander beabstandet sein. Die beiden Kanäle können bei dieser Ausführungsform in einer gemeinsamen Querschnittsebene durch die Lamelle verlaufen, wobei jedoch der eine Kanal näher an der Mittelachse der Lamelle angeordnet ist als der andere. Mit anderen Worten kann die Lamelle außen oder innen intensiver oder auch völlig gleichmäßig gekühlt werden. Dadurch kann in vorteilhafter Weise einer sich in Abhängigkeit vom Radius der Lamelle ergebenden Reibwärme Rechnung getragen werden.

Die beiden Kanäle können in radialer Richtung des Grundkörpers mäandrierend ausgebildet sein. Die beiden Kanäle können ergänzend oder alternativ in axialer Richtung des Grundkörpers mäandrierend ausgebildet sein. Die Kanäle können entlang einer Rechteckbahn, einer Sinusbahn oder dgl. verlaufen. Durch die Wahl des Verlaufs der Kanäle kann die wirksame Oberfläche zur Wärmeübertragung des Kanals vergrößert werden. Zudem kann sich durch diesen Verlauf der Kanäle eine turbulente Strömung einstellen, welche die Wärmeübertragung weiter verbessern kann. Das durch den Kanal hindurchgeführte Kühlmittel kann verwirbeln, wodurch die Kühlleistung weiter erhöht wird.

Die beiden Kanäle können ergänzend oder alternativ in axialer Richtung des Grundkörpers voneinander beabstandet sein. Dies bedeutet, dass in ein und derselben Lamelle bzw. in ein und demselben Grundkörper zwei durch eine Art Zwischenschicht in Querschnittsrichtung getrennte Kanäle vorgesehen sind. Ein Vorteil dieser Ausbildung ist beispielsweise im Falle von besonders breiten Lamellen darin zu sehen, dass durch diese Zwischenschicht, d.h. Form von baulicher Trennung der beiden Kanäle eine konstruktive Verstärkung des Grundkörpers im Vergleich mit einem breiten, durchgängigen Kanal gegeben ist. Diese Weiterbildung ist insbesondere bei Lamellen von Vorteil, bei denen der Grundkörper an beiden, einander gegenüberliegenden Seiten Reibflächen aufweist.

Gemäß einer vorteilhaften Weiterbildung der Erfindung weist der Grundkörper zwei lösbar miteinander verbindbare Ringhälften auf. Der Grundkörper im verwendungsfertigen Zustand bildet grob vereinfacht die Form eines Rings. Der Grundkörper ist gemäß dieser Weiterbildung in Längsrichtung in zwei Hälften unterteilt. In jeder Ringhälfte ist zumindest ein Kanal zum Durchströmen mit flüssigen Kühlmitteln ausgebildet. In jeder Ringhälfte können aber auch mehrere strömungstechnisch voneinander getrennte Kanäle zur Durchströmung mit flüssigen Kühlmitteln vorgesehen sein. Die beiden Ringhälften können jeweils mit einem ersten Ende um eine Achse drehbar gelagert sein und mit einem zweiten Ende lösbar festgelegt sein. Durch Lösen des zweiten Endes können die Ringhälften aufgeschwenkt werden. Dies hat den Vorteil, dass die Reibflächen, beispielsweise in Form von am Grundkörper montierten Reibbelägen, dann sehr einfach zugänglich sind. Auf diese Weise kann ein Wechsel der Reibbeläge besonders einfach durchgeführt werden. Ein Demontieren und anschließend erneutes Montieren der Bremse bei einem Belagwechsel ist entbehrlich. Die Handhabung wird dadurch gegenüber den bekannten Lamellen verbessert.

Gemäß einer vorteilhaften Weiterbildung der Erfindung sind der Grundkörper bzw. die Ringhälften aus zwei in axialer Richtung miteinander verbindbaren Lamellenhälften ausgebildet. Die Lamellenhälften können kongruent ausgebildet sein. Durch Aufeinanderlegen und anschließendes miteinander Verbinden wird der Grundkörper geschaffen. Die beiden Lamellenhälften ergeben sich dem Grunde nach durch einen Querschnitt in radialer Richtung durch den Grundkörper. Diese Ausbildung des Grundkörpers bzw. der Ringhälften hat den Vorteil, dass die Kanäle vergleichsweise einfach in den Grundkörper bzw. die Ringhälften eingebracht werden können. Sie können nämlich unmittelbar in die Lamellenhälften eingebracht werden, beispielsweise durch Fräsen, Drehen, Urformen oder dgl. Anschließend werden die beiden Lamellenhälften miteinander verbunden, so dass sich insgesamt innenliegende Kanäle ergeben. Ggf. muss zusätzlich eine Dichtung vorgesehen sein, beispielsweise in Form eines um einen Kanal umlaufenden Dichtungsrings, welcher zwischen den beiden Lamellenhälften festgeklemmt wird. Die beiden Lamellenhälften können lösbar miteinander verbunden sein, beispielsweise verschraubt. Dies erleichtert die Wartung und ggf. Reparatur der Lamelle.

Gemäß einer vorteilhaften Weiterbildung der Erfindung ist der Grundkörper aus Aluminium und/oder einer Aluminiumlegierung gebildet sowie mit einer säurefesten Beschichtung versehen. Die säurefeste Beschichtung ist insbesondere im Bereich der Oberfläche der Kanäle vorgesehen. Dadurch kann der Grundkörper korrosionsbeständig gegenüber den Umgebungseinflüssen von Seeluft und/oder Seewasser ausgebildet werden.

Der Grundkörper kann aus einer gut wärmeleitenden Keramik, beispielsweise Aluminium-Nitrat oder Aluminium-Oxid gebildet sein. Aluminium-Oxid hat den Vorteil, dass es kostengünstiger ist. Insbesondere durch die Verwendung von Aluminium-Nitrat kann eine vergleichsweise hohe Wärmeleitfähigkeit erreicht werden, nämlich bis zu 170 W/mK bis 180 W/mK. Durch einen solchen Grundkörper kann die an den Lamellen infolge von Reibung entstehende Wärme besonders gut abgeführt werden. Insbesondere Aluminium-Nitrat hat zudem den Vorteil, dass es vergleichsweise säurefest ist. Gegebenenfalls kann auf eine zusätzlich säurefeste Beschichtung verzichtet werden. Die Verwendung eines vorstehend beschriebenen Materials für den Grundkörper hat zudem den Vorteil, dass der Grundkörper aus zwei Hälften zu einem einstückigen Körper verbunden werden kann. Mit einem einstückigen Körper im Sinne der Erfindung ist ein monolithischer Körper gemeint, der entlang der Fügefläche nicht ohne Weiteres wieder aufgetrennt werden kann. Ein solch einstückiger Körper kann beispielsweise durch Sintern hergestellt werden. Insbesondere das vorstehend beschriebene Aluminium-Nitrat lässt sich gut durch Sintern verarbeiten.

Gemäß einer vorteilhaften Weiterbildung der Erfindung weist der Grundkörper einen Reibbelagträger aus Stahl, insbesondere Edelstahl auf. Dieser kann von außen auf dem Grundkörper montiert sein. Der Reibbelagträger aus Stahl ist insbesondere bei sehr großen Bremsen von Vorteil. Bei diesen können die Spannungen auf den Grundkörper, insbesondere wenn dieser beispielsweise aus Aluminium gebildet ist, sehr groß werden. Zur Entlastung, insbesondere Ableitung von Reaktionsmomenten, kann dann der Reibbelagträger aus Stahl verwendet werden.

Der Grundkörper kann aus Aluminium-Nitrat oder Aluminium-Oxid gebildet sein. Aluminium-Oxid hat den Vorteil, dass es kostengünstiger ist. Insbesondere durch die Verwendung von Aluminium-Nitrat kann eine vergleichsweise hohe Wärmeleitfähigkeit erreicht werden, nämlich bis zu 170 W/mK bis 180 W/mK. Durch einen solchen Grundkörper kann die an den Lamellen infolge Reibung entstehende Wärme besonders abgeführt werden. Insbesondere Aluminium-Nitrat hat zudem den Vorteil, dass es vergleichsweise säurefest ist. Gegebenenfalls kann auf eine zusätzlich säurefeste Beschichtung verzichtet werden. Die Verwendung eines vorstehend beschriebenen Materials für den Grundkörper hat zudem den Vorteil, dass der Grundkörper aus zwei Hälften zu einem einstückigen Körper verbunden werden kann. Mit einstückigem im Sinne der Erfindung ist ein monolithischer Körper gemeint, der entlang der Fügefläche nicht ohne Weiteres wieder aufgetrennt werden kann. Ein solch einstückiger Körper kann beispielsweise durch Sintern hergestellt werden. Insbesondere das vorstehend beschriebene Aluminium-Nitrat lässt sich gut durch Sintern verarbeiten.

Gemäß einer vorteilhaften Weiterbildung der Erfindung ist die Reibfläche von einem Reibbelag aus einem Composite- oder Karbon-Keramik-Werkstoff bereitgestellt. Dadurch kann in vorteilhafter Weise vollständig auf die Verwendung von Kupfer als Werkstoff verzichtet werden. Kupfer steht in dem Verdacht, toxisch zu sein. Seine Verwendung sollte daher insbesondere unter Umweltaspekten vermieden werden.

Gemäß einer vorteilhaften Weiterbildung der Erfindung sind in den Grundkörper Reibbelagträger aus einem keramischen Werkstoff eingesetzt. Hierbei kann es sich um die vorstehend bereits thematisierten Materialien Aluminium-Nitrat und/oder Aluminium-Oxid handeln. Der Kerngedanke dieser Weiterbildung besteht darin, dass die besonders hohe Wärmeleitfähigkeit dieser keramischen Materialien genau dort zum Tragen kommen kann, wo bei Betrieb einer Bremse die Wärme anfällt. Diese fällt nämlich an den Reibbelägen an und muss von den Reibflächen abtransportiert werden. Durch die Verwendung von Reibbelagträgern aus einem keramischen Werkstoff kann dies besonders gut geschehen. Gleichzeitig muss nicht der gesamte Grundkörper der Lamelle aus dem vorstehend thematisierten keramischen Werkstoff ausgebildet werden. Der die Reibbelagträger aufnehmende Grundkörper kann beispielsweise aus Aluminium beziehungsweise der bereits genannten Aluminium-Legierung gebildet sein. Gemäß dieser Weiterbildung können in synergetischer Weise unterschiedliche Werkstoffe und deren jeweilige Eigenschaften gezielt miteinander kombiniert werden, um eine Lamelle mit verbesserter Wärmeableitung von den Reibbelägen und zugleich eine verbesserte Stabilität sowie Beständigkeit gegenüber beispielsweise Säure und/oder dergleichen zu erreichen.

Gemäß einer vorteilhaften Weiterbildung der Erfindung sind die Reibbelagträger durch insbesondere gewellte Rohre strömungstechnisch miteinander verbunden. Die Rohre können aus temperaturfestem Silikon und/oder Kunststoff ausgebildet sein. Die Rohre können auf Anschlüsse der Reibbelagträger aufgeschoben und/oder in diese eingesteckt sein. Dadurch kann innerhalb des Grundkörpers der Lamelle ein in sich gekapseltes Kühlsystem geschaffen werden, ohne dass das Kühlmedium mit dem Grundkörper in direkten Kontakt treten würde.

Die Erfindung betrifft darüber hinaus eine Bremse bzw. Kupplung mit zumindest einer äußeren, wie vorstehend beschrieben ausgebildeten Lamelle und einer inneren Lamelle aus Keramik, insbesondere Faserkeramik. Hierbei handelt es sich um einen thermisch hoch belastbaren Werkstoff. Dieser hat den Vorteil, dass der Reibbelag an der äußeren Lamelle als "Opferbelag" ausgebildet werden kann. Dies bedeutet, dass der Reibbelag der Außenlamelle derjenige ist, der bei einem bestimmungsgemäßen Betrieb verschleißt. In Kombination mit den vorstehend thematisierten Möglichkeiten zum einfachen Belagwechsel an der Außenlamelle führt dies dazu, dass die Beläge an der inneren Lamelle dem Grunde nach wartungsfrei sind und insofern auch eine Demontage und Montage zum Wechseln der inneren Lamellen entbehrlich ist. Die Handhabe wird dadurch weiter verbessert.

Erfindungsgemäß haben Versuche der Anmelderin zudem gezeigt, dass ein erfindungsgemäßer Grundkörper besonders gut und auch wirtschaftlich durch ein additives Fertigungsverfahren hergestellt werden kann. Hierbei kann es sich beispielsweise um Laserschmelzen und/oder Lasersintern handeln. Derartige Verfahren sind umgangssprachlich als "3-D-Druck" bekannt und wurden bislang nur im Rapid-Prototyping-Bereich eingesetzt. Versuche der Anmelderin haben jedoch ergeben, dass mit diesem Verfahren darüber hinaus auch massenhaft und im industriellen Maßstab entsprechende Lamellen herstellbar sind. Durch die Verwendung eines additiven Fügeverfahrens, insbesondere (Laser-) Sintern, kann ein einstückiger Grundkörper ausgebildet werden. Dies bedeutet, dass der Grundkörper nach der Herstellung nicht mehr ohne Weiteres aufgetrennt werden kann. Es wird mit anderen Worten ein monolithischer Grundkörper gebildet. Auf diese Weise lässt sich erreichen, dass die Kanäle innerhalb des Grundkörpers vollständig geschlossen sind, natürlich bis auf die gegebenenfalls vorgesehenen Ein- und Auslässe. Somit hat dieses Verfahren den Vorteil, dass gegebenenfalls auf ein zusätzliches Dichtelement wie einen den Kanal umgebenden O-Ring und/oder dergleichen vollständig verzichtet werden kann.

Weitere Vorteile und Merkmale ergeben sich anhand der nachfolgenden Figurenbeschreibung. Es zeigen:
- Fig. 1: eine Ausführungsform einer erfindungsgemäßen Lamelle im Querschnitt;
- Fig. 2: die Lamelle gemäß Fig. 1 im Längsschnitt;
- Fig. 3: eine alternative Ausführungsform einer erfindungsgemäßen Lamelle im Querschnitt;
- Fig. 4: die Lamelle gemäß Fig. 3 im Längsschnitt;
- Fig. 5: die Ansicht nach Fig. 4 auf einer alternativen Ausführungsform einer erfindungsgemäßen Lamelle;
- Fig. 6: eine weitere Ausführungsform einer erfindungsgemäßen Lamelle im Querschnitt;
- Fig. 7: eine weitere Ausführungsform einer erfindungsgemäßen Lamelle im Querschnitt;.
- Fig. 8: eine weitere Ausführungsform einer erfindungsgemäßen Lamelle im Querschnitt;
- Fig. 9: ein Detail der Lamelle gemäß Fig. 8;
- Fig. 10: ein Detail der Lamelle gemäß Fig. 8;
- Fig. 11: ein Detail einer weiteren Ausführungsform einer erfindungsgemäßen Lamelle;
- Fig. 12: eine Querschnittsansicht des Details gemäß Fig. 11;
- Fig. 13: eine weitere Ausführungsform einer erfindungsgemäßen Lamelle; und
- Fig. 14: eine weitere Ausführungsform einer erfindungsgemäßen Lamelle.

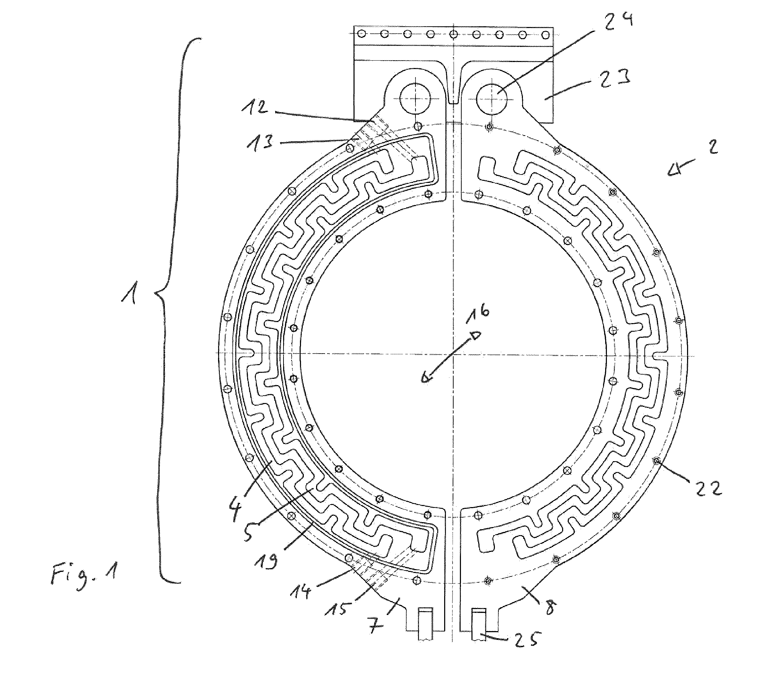

Fig. 1 zeigt eine erste Ausführungsform einer erfindungsgemäßen Lamelle im Querschnitt. Diese ist als Außenlamelle 1 ausgebildet. Sie verfügt über einen Grundkörper 2. Der Grundkörper 2 besteht vorliegend aus zwei Ringhälften 7, 8. In einer alternativen Ausführungsform könnten die beiden Ringhälften 7, 8 aber auch miteinander verbunden sein.

In jeder der beiden Ringhälften 7, 8 sind zwei strömungstechnisch voneinander getrennte Kanäle 4, 5 ausgebildet. Die Kanäle 4, 5 liegen vollständig innerhalb des Grundkörpers 2. Sie sind lediglich durch entsprechende Ein- und Auslässe 12, 13, 14, 15 zugänglich.

Die Kanäle 4, 5 verlaufen mäandrierend. Hierdurch wird die Oberfläche für einen Wärmeaustausch vergrößert. Durch die Kanäle 4, 5 wird ein Fluid, insbesondere eine Kühlflüssigkeit wie beispielsweise Wasser hindurchgeführt. Die beiden Kanäle 4, 5 können im Gegenstrom durchströmt werden. Hierdurch kann die Kühlleistung besser auf den gesamten Umfang des Grundkörpers 2 verteilt werden. Die Kanäle 4, 5 sind in radialer Richtung 16 mäandrierend ausgebildet. Sie sind in radialer Richtung 16 voneinander beabstandet.

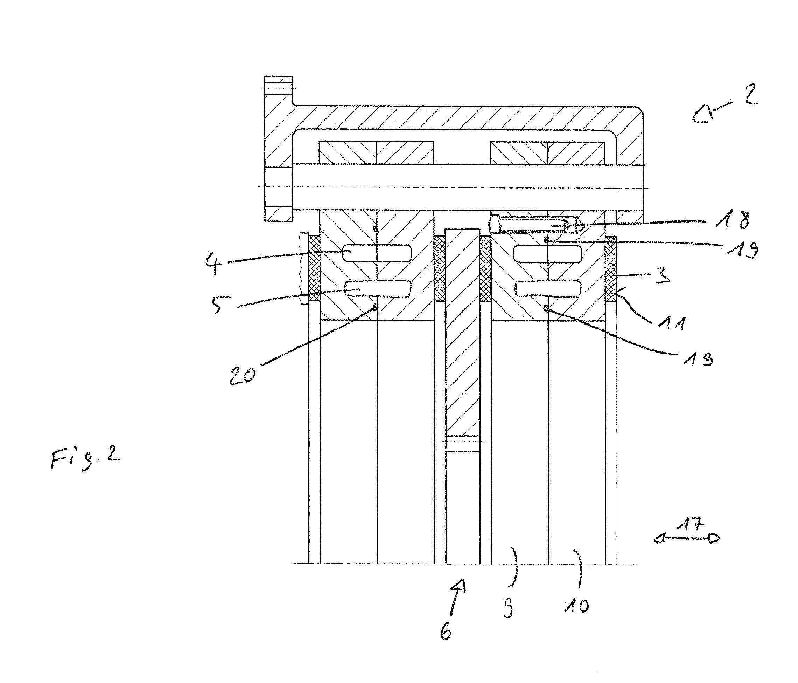

Fig. 2 zeigt einen Längsschnitt durch die Außenlamelle 1. Diese ist Teil eines zwei Außenlamelle 1 umfassenden Lamellenpakets. Es ist zu erkennen, dass der Grundkörper 2 bzw. die beiden Ringhälften 7, 8 jeweils aus zwei Lamellenhälften 9, 10 bestehen. In jede der Lamellenhälften 9, 10 ist eine Art Nut eingebracht. Werden die beiden Lamellenhälften 9, 10 aufeinander angeordnet, so wie dies in Fig. 2 gezeigt ist, bilden jeweils zueinander korrespondierende Nuten die Kanäle 4, 5.

Die beiden Lamellenhälften 9, 10 werden miteinander verschraubt. Hierzu dient eine Schraube 18, welche durch die eine Lamellenhälfte 9 hindurchgesteckt und mit einer Gewindebohrung 22 in der anderen Lamellenhälfte 10 verbunden wird. Die beiden Lamellenhälften 9, 10 können so gegeneinander verspannt werden. Um bei dieser Ausführungsform die Kanäle 4, 5 abzudichten, wird eine Dichtung 19 verwendet. Diese weist im Wesentlichen die Form eines O-Rings auf. Sie wird um die Kanäle 44, 5 herum gelegt und bei der Montage der beiden Lamellenhälften 9, 10 zwischen diesen eingespannt.

An den Grundkörpern 2 sind außen Reibbeläge 3 angeordnet. Diese stellen eine Reibfläche 11 bereit. Sofern die Bremse geschlossen wird, drücken die Reibbeläge 3 und eine Innenlamelle 6 in axialer Richtung 17 gegeneinander. Durch die entstehende Reibung wird eine Relativbewegung zwischen beiden Teilen abgebremst.

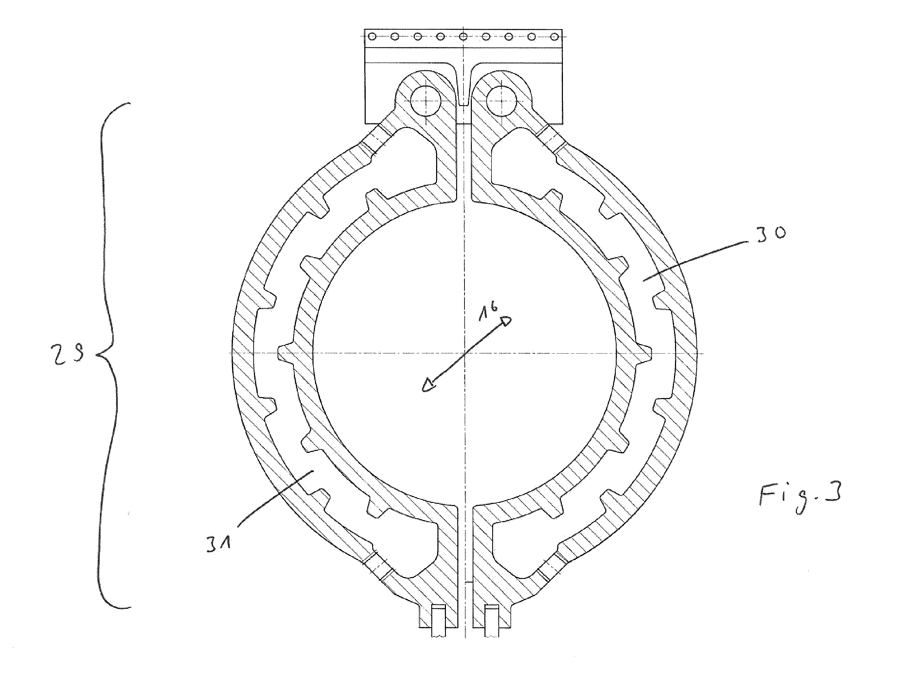

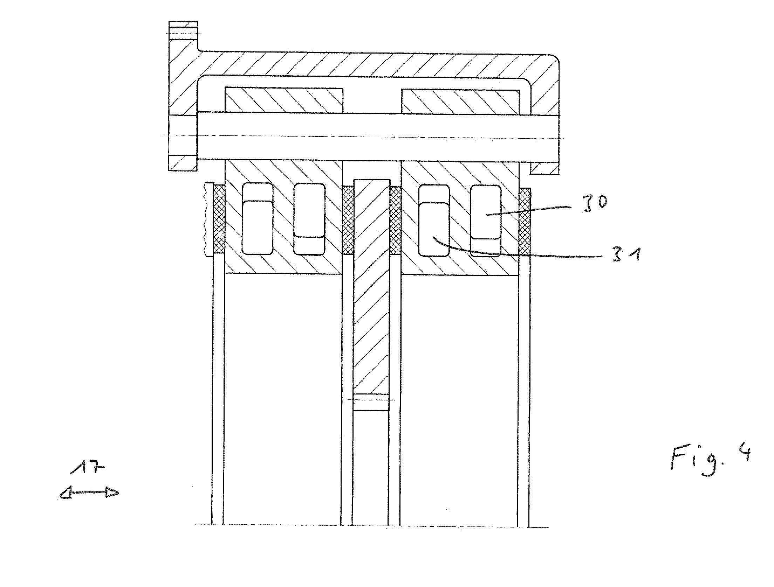

Fig. 3 zeigt eine alternative Ausführungsform einer Außenlamelle 29. Ein Längsschnitt ist in Figur 4 dargestellt. Die Außenlamelle 29 ist ähnlich wie die Außenlamelle 1 gemäß den Figuren 1 und 2 aufgebaut. Ein wesentlicher Unterschied besteht jedoch in der Anordnung der beiden Kanäle 30, 31. Diese sind nicht in radialer Richtung 16 voneinander beabstandet, sondern in axialer Richtung 17.

Ein weiterer Unterschied besteht darin, dass der Grundkörper der Außenlamelle 29 bzw. die beiden Ringhälften dieser Außenlamelle 29 jeweils einstückig ausgebildet sind. Dies bedeutet, dass nicht zwei Lamellenhälften miteinander verbunden werden müssen, sondern vielmehr ein bereits in sich abgeschlossenes Bauteil vorliegt. Die Ausführungsform gemäß den Figuren 1 und 2 könnte ebenfalls einen einstückigen Grundkörper aufweisen. Ein derartiger einstückiger Grundkörper lässt sich beispielsweise durch additive Fertigungsverfahren wie Laserschmelzen oder Lasersintern herstellen.

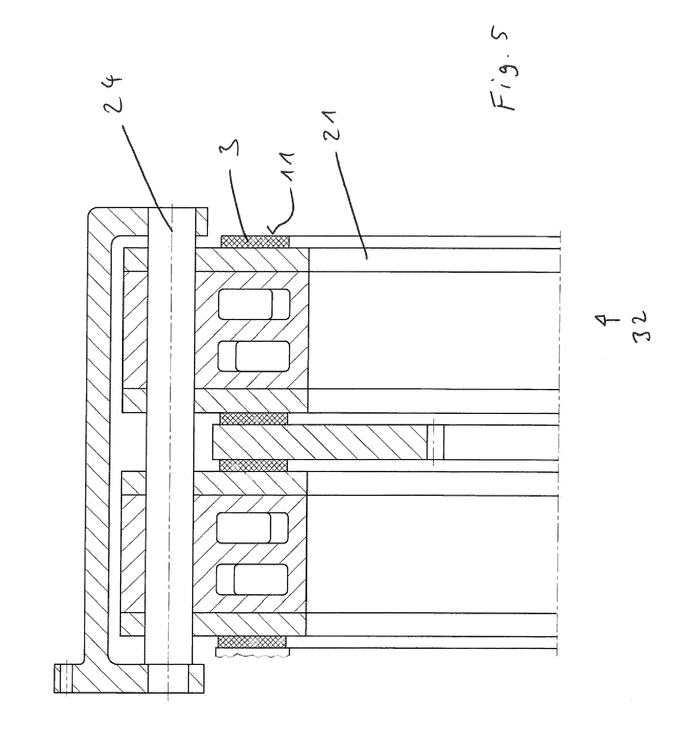

Fig. 5 zeigt eine weitere Ausführungsform einer erfindungsgemäßen Außenlamelle 32 in der Ansicht gemäß Fig. 4. Im Unterschied zur Ausführungsform nach Fig. 4 weist die Außenlamelle 32 Reibbelagträger 21 auf, welche seitlich an den Grundkörper der Außenlamelle 32 angeordnet sind. Die Reibbelagträger bestehen aus einem Material, welches eine höhere Steifigkeit als das Material des Grundkörpers aufweist. Dadurch kann der Grundkörper und somit die Außenlamelle 32 insgesamt stabilisiert werden, was beispielsweise bei besonders großen Außenlamelle aus weichen Werkstoffen wie Aluminium von Vorteil ist.

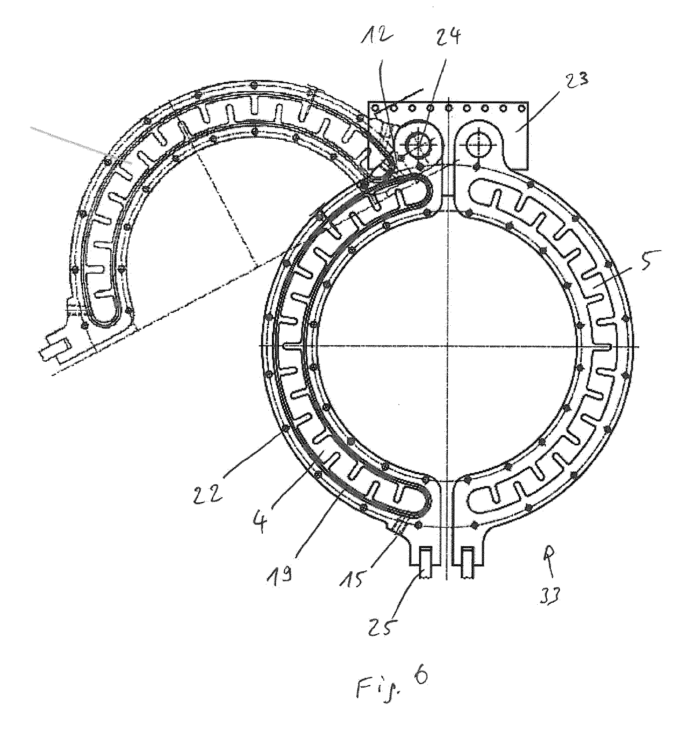

Fig. 6 zeigt eine weitere Ausführungsform einer erfindungsgemäßen Außenlamelle 33. Diese weist ebenfalls zwei Ringhälften auf, wobei in jeder Ringhälfte nur ein einziger Kanal 4, 5 für ein Kühlmittel vorgesehen ist. Die Ringhälften der Außenlamelle 33 könnten aber auch gemäß einer der übrigen beschriebenen Ausführungsformen ausgebildet sein.

Entscheidend ist, dass die beiden Ringhälften beispielsweise zum Zwecke eines Belagwechsels ausgeklappt werden können. Hierzu sind die beiden Ringhälften um ein Drehgelenk 24 drehbar an einer Aufnahme 23 gelagert. Ein gegenüberliegendes Ende der Ringhälften ist an einer lösbaren Aufnahme 25 befestigt. Die Ringhälfte kann von der Aufnahme 25 gelöst werden, beispielsweise durch Verschwenken oder dgl. Anschließend kann die Ringhälfte um das Drehgelenk 24 gedreht werden, so dass die Reibbeläge dieser Ringhälfte mit den entsprechenden Reibflächen der Innenlamellen außer Eingriff gebracht werden. In der ausgeklappten Stellung, welche in der Figur schematisch dargestellt ist, können die Reibbeläge somit problemlos getauscht werden. Eine Demontage und Montage der gesamten Bremse bzw. Kupplung ist entbehrlich.

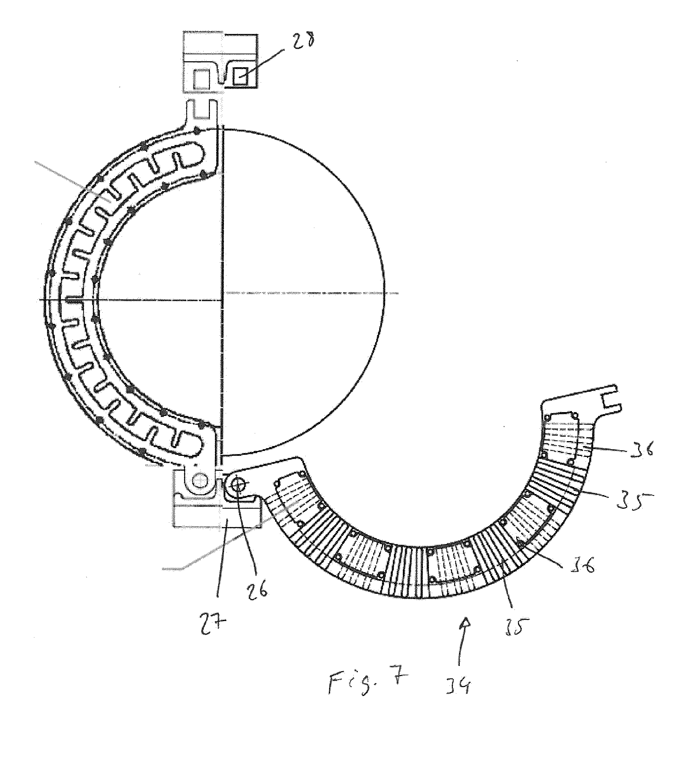

Fig. 7 zeigt eine alternative Ausführungsform. Bei dieser ist ähnlich wie in Fig. 6 eine Aufnahme 27 vorgesehen mit einem Drehgelenk 26, um welches eine Ringhälfte drehbar gelagert ist. Das andere Ende der Ringhälfte ist an einer Aufnahme 28 lösbare gehalten. Im Unterschied zur Fig. 6 ist die Aufnahme 27 mit dem Drehgelenk 26 jedoch nicht oben, sondern unten angeordnet. Die Aufnahme 28 ist entsprechend oben und nicht unten angeordnet.

Entscheidend ist aber, dass die aufgeklappt dargestellte Ringhälfte 34 neben der hier nicht dargestellten inneren Flüssigkeitskühlung durch einen Kanal ein zusätzliches Kühlelement in Form von Kühlrippen 35 aufweist. Auf jeder Seite der Ringhälfte 34 wechseln sich jeweils ein Bereich mit Kühlrippen 35 mit einem Bereich mit einem Reibbelag 36 ab. Sie jeweils andere Seite der Ringhälfte 34 ist entsprechend versetzt ausgebildet. Dies bedeutet, dass anstelle eines Reibbeiages 36 auf der einen Seite der Ringhälfte 34 auf der anderen Seite gegenüberliegend ein Bereich mit Kühlrippen 35 vorgesehen ist. Dadurch wird eine Art hybrides Kühlsystem geschaffen. Die Lamelle ist kombiniert flüssigkeits- und luftgekühlt. Dadurch lässt sich die Kühlleistung weiter verbessern.

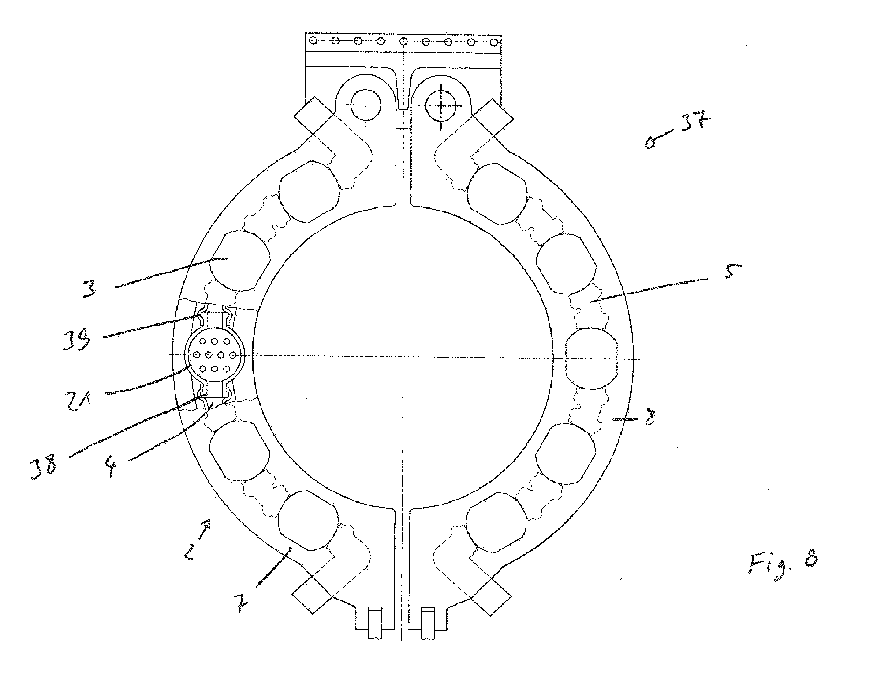

Fig. 8 zeigt eine weitere Ausführungsform einer erfindungsgemäßen Außenlamelle 37. Diese verfügt über zwei Ringhälften 7, 8. In jeder Ringhälfte 7, 8 ist ein Kanal 4, 5 ausgebildet.

Die Reibbeläge 3 sind auf Reibbelagträgern 21 angeordnet. Die Reibbelagträger 21 sind in dieser Ausführungsform als Kühlkassetten ausgebildet. Diese Kühlkassetten sind aus Keramik, insbesondere aus Aluminium-Nitrat ausgebildet. Die Reibbelagträger 21 sind in den Grundkörper der Ringhälften 7, 8 eingesetzt. Der Grundkörper der Ringhälften 7, 8 kann aus einem Komposit-Material gebildet sein.

Die in Form von Kühlkassetten ausgebildeten Reibbelagträger 21 bestehen aus einer Keramik mit einem hohen Wärmeleitwert. Die Auswahl richtet sich nach den jeweiligen Einsatzbedingungen. Die Keramik weist eine hohe Druckfestigkeit und eine gute Temperaturleitfähigkeit auf.

Die Reibbelagträger 21 weisen einen Innenraum mit einer großen Oberfläche zum Wärmetransfer auf. Der Innenraum kann im Querschnitt rund ausgebildet sein. Im Innenraum sind Rippen 40 vorgesehen, welche sich rechtwinklig zur Reibfläche 11 der Reibbeläge 3 erstrecken. Die Reibbelagträger 21 können ein- oder zweikanalig ausgebildet sein. Sofern sie zweikanalig ausgebildet sind, kann das Kühlmedium im Gegenstrom durch sie hindurchgeführt werden.

Die Reibbelagträger 21 weisen zwei einander gegenüberliegende Flansche 38 auf. An diese Flansche 38 können Schläuche 39 beziehungsweise Rohre montiert werden. Vorliegend sind die Schläuche 29 auf die Flansche 38 aufgeschoben. Die Schläuche 39 können aus einem temperaturfesten Silikon ausgebildet sein. Die Schläuche 39 dienen der Abdichtung. Sofern ein einteiliger Grundkörper, beispielsweise als Spritzgießteil, gebildet wird, kann auf die Schläuche 39 gegebenenfalls verzichtet werden, da die Dichtheit bereits durch den Spritzprozess erreicht werden kann.

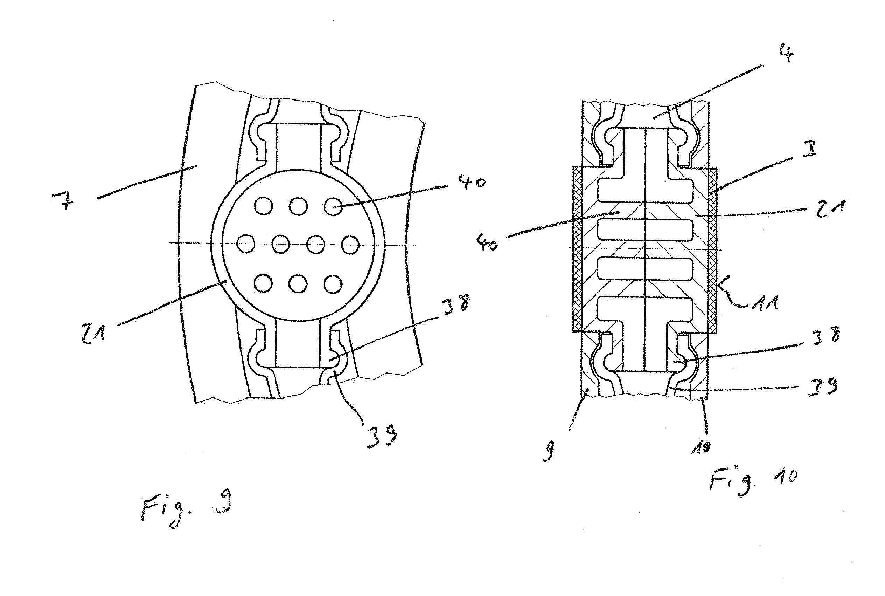

Die Reibbelagträger 21 können aus zwei insbesondere symmetrischen Hälften gebildet werden, wie dies in Figur 10 dargestellt ist. Beispielsweise durch Sintern können die beiden Hälften zu einem monolithischen Hohlkörper unlösbar verbunden werden.

Die Reibbelagträger 21 treten ganz oder teilweise durch den Grundkörper, insbesondere die Lamellenhälften 9, 10 nach außen. Der Reibbelag 3 hat somit eine direkte Kontaktfläche zum Reibbelagträger 21. Dadurch kann ein direkter Wärmeübergang vom Reibbelag in die Kühlkassette und somit ein direkter Wärmeaustausch mit dem flüssigen Kühlmedium im Kanal 4, 5 erreicht werden.

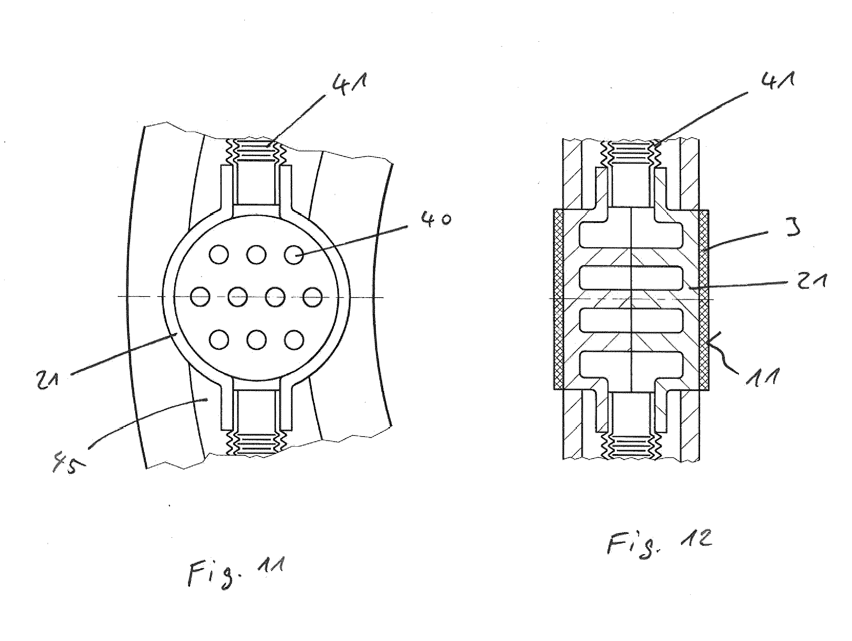

Wie Fig. 8 offenbart, bilden mehrere in Umfangsrichtung der Außenlamelle 37 aneinandergereihte Reibbelagträger 21 eine Art Kette. Die einzelnen Reibbelagträger 21 sind strömungstechnisch miteinander verbunden, insbesondere durch die bereits beschriebenen Schläuche 39. Eine Alternative zu den Schläuchen 39 offenbaren die Figuren 11 und 12. Hier kommen Wellrohre 41 zum Einsatz. Diese können aus Kunststoff oder Stahl ausgebildet sein. Die Verwendung von Wellrohren 41 hat den Vorteil, dass dadurch die bei der Herstellung und im Betrieb der Lamelle auftretenden Drücke besonders gut aufgenommen werden können. Die Lamelle ist dadurch besonders dauerfest und haltbar. Eine Montage der Außenlamelle 37 geht dann wie folgt von statten. Die Ketten aus dem mittels der Wellrohre 41 verbundenen Reibbelagträger 21 werden vormontiert. Anschließend werden sie in eine Spritzgießform eingelegt. Eine Ringhälfte 7, 8 kann dann komplett einteilig, insbesondere monolithisch im Spritzgießverfahren oder auch in Kunstharz-Pressverfahren hergestellt werden. Das Wellrohr 41 hat hierbei den Vorteil, dass einerseits eine gewisse Elastizität bei der Formgebung während der Herstellung ermöglicht wird. Andererseits wirkt die vergleichsweise große Steifigkeit des Wellrohrs 41 gegen die auftretenden Prozessdrücke nach innen. Hierdurch kann eine besonders gute Dichtigkeit der flüssigkeitsgekühlten Lamelle erreicht werden. Hinzu kommt, dass die Wellrohre 41 im endmontierten Zustand von einem Füllmaterial 45 vollumfänglich eingeschlossen sind. Bei diesem Füllmaterial 45 kann es sich um einen Kunststoff, einen Schaum und/oder dergleichen handeln. Ein Vorteil dieses Füllmaterials 45 besteht darin, dass die Dichtigkeit der Lamelle, d. h. des innerhalb der Lamelle verlaufenden Kühlmittelkanals besonders gut sichergestellt werden kann. Denn selbst wenn das Wellrohr 41 eine Undichtigkeit aufweisen sollte, wird eventuelle austretende Flüssigkeit durch das Füllmaterial 45 innerhalb des Kühlsystems gehalten. Die Kombination aus Wellrohr 41 einerseits und Füllmaterial 45 andererseits führt somit zu einer Art redundanten Sicherung der Abdichtung.

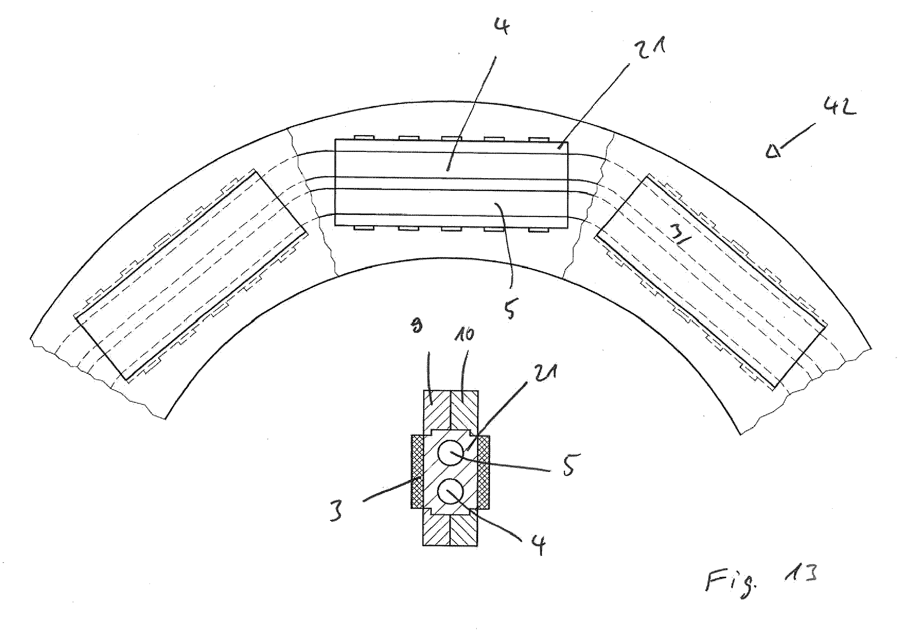

Eine alternative Ausführungsform offenbart Fig. 13. Diese zeigt eine Außenlamelle 42 ausschnittsweise. Auch hier wird ein Grundkörper aus Lamellenhälften 9, 10 aus einem Komposit-Material verwendet. In diesem sind keramische Reibbelagträger 21 eingesetzt. Diese können als Strang-Pressteile ausgebildet sein. Im Inneren der Reibbelagträger 21 sind zwei strömungstechnisch voneinander getrennte Kühlkanäle 4, 5 ausgebildet. Die Reibbelagträger 21 erstrecken sich vorzugsweise bis zu den seitlichen Flanken des Grundkörpers aus den Lamellenhälften 9, 10. Auf dem Reibbelagträger 21 sind die Reibbeläge 3 angeordnet.

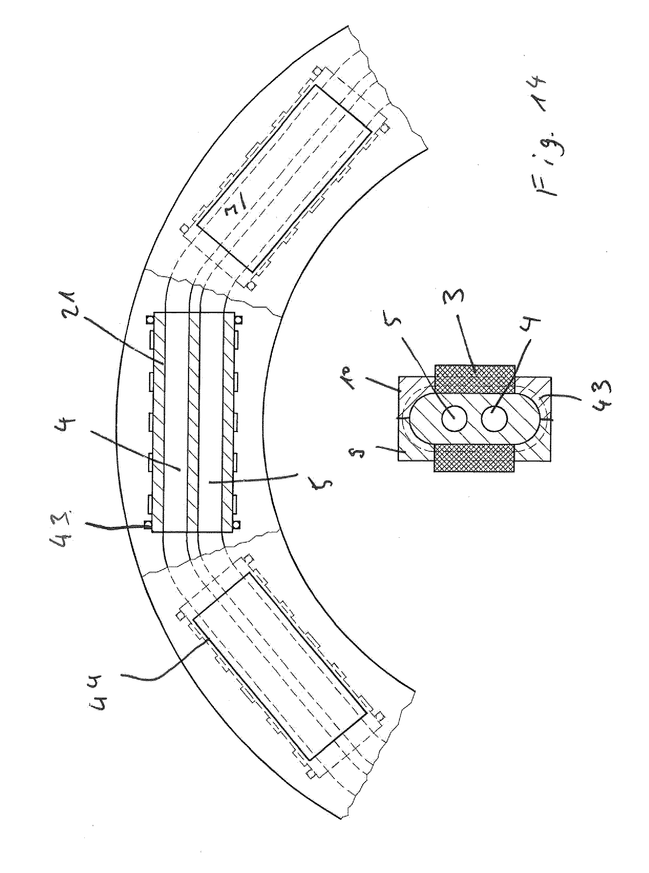

Fig. 14 zeigt eine weitere Ausführungsform einer Außenlamelle. Die Reibbelagträger 21 sind ähnlich wie bei der Ausführungsform gemäß Fig. 13 ausgebildet. Sie liegen jedoch nach der Herstellung vollständig innerhalb des aus den Lamellenhälften 9, 10 gebildeten Grundkörpers. Dies hat den Vorteil, dass die Reibbelagträger 21 besser abgedichtet werden können. Insbesondere wenn die Reibbelagträger 21 eine Form ohne Kanten aufweisen, beispielsweise eine ovale oder auch prismatische Form, kann eine umlaufende statische Dichtung vorgesehen werden. Hierbei kann es sich beispielsweise um einen O-Ring 43, insbesondere aus hochtemperaturfestem Silikon handeln. Der Grundkörper der Lamelle weist dann entsprechende Aussparungen 44 auf, welche einen Zugang von außerhalb zu den Reibbelagträgern 21 ermöglichen und in welche die Reibbeläge 3 eingesetzt werden können.

Die zuvor beschriebenen Reibbelagträger 21 aus Keramik haben den Vorteil, dass sie die im Betrieb der Lamelle auftretenden Bremse bzw. Kupplungskräfte sehr gut aufnehmen können. Zudem können sie insbesondere vollständig in die Lamelle eingebettet sein, was die Wärmeübertragung weiter verbessert.

### Bezugszeichen

- 1: Außenlamelle
- 2: Grundkörper
- 3: Reibbelag
- 4: Kanal
- 5: Kanal
- 6: Innenlamelle
- 7: Ringhälfte
- 8: Ringhälfte
- 9: Lamellenhälfte
- 10: Lamellenhälfte
- 11: Reibfläche
- 12: Ein-/Auslass
- 13: Ein-/Auslass
- 14: Ein-/Auslass
- 15: Ein-/Auslass
- 16: radiale Richtung
- 17: axiale Richtung
- 18: Schraube
- 19: Dichtung
- 20: Dichtung
- 21: Reibbelagträger
- 22: Gewindebohrung
- 23: Aufnahme
- 24: Drehgelenk
- 25: Aufnahme
- 26: Drehgelenk
- 27: Aufnahme
- 28: Aufnahme
- 29: Außenlamelle
- 30: Kanal
- 31: Kanal
- 32: Außenlamelle
- 33: Außenlamelle
- 34: Ringhälfte
- 35: Kühlrippen
- 36: Reibbelag
- 37: Außenlamelle
- 38: Flansch
- 39: Schlauch
- 40: Rippe
- 41: Wellrohr
- 42: Außenlamelle
- 43: O-Ring
- 44: Aussparung
- 45: Füllmaterial

## Patentansprüche

1. Lamelle (1, 29, 32, 33) für eine indirekt flüssigkeitsgekühlte Reibungsbremse, mit einem Grundkörper (2) zur Bereitstellung zumindest einer Reibfläche (11), **dadurch gekennzeichnet, dass** der Grundkörper (2) zwei strömungstechnisch voneinander getrennte Kanäle (4, 5, 30, 31) zur Durchströmung mit flüssigen Kühlmitteln aufweist.

2. Lamelle nach Anspruch 1, **dadurch gekennzeichnet, dass** die beiden Kanäle (4, 5, 30, 31) in radialer Richtung (16) des Grundkörpers (2) voneinander beabstandet sind.

3. Lamelle nach einem der vorangehenden Ansprüche, **dadurch gekennzeichnet, dass** die beiden Kanäle (4, 5, 30, 31) in axialer Richtung des Grundkörpers (2) voneinander beabstandet sind.

4. Lamelle nach einem der vorangehenden Ansprüche, **dadurch gekennzeichnet, dass** die beiden Kanäle (4, 5, 30, 31) in radialer Richtung des Grundkörpers (2) mäandrierend ausgebildet sind.

5. Lamelle nach einem der vorangehenden Ansprüche, **dadurch gekennzeichnet, dass** die beiden Kanäle (4, 5, 30, 31) in axialer Richtung des Grundkörpers (2) mäandrierend ausgebildet sind.

6. Lamelle nach einem der vorangehenden Ansprüche, **dadurch gekennzeichnet, dass** jeder der Kanäle (4, 5, 30, 31) einen Einlass und einen Auslass (12, 13, 14, 15) aufweist.

7. Lamelle nach einem der vorangehenden Ansprüche, **dadurch gekennzeichnet, dass** der Grundkörper (2) zwei lösbar miteinander verbindbare Ringhälften (7, 8, 34) aufweist.

8. Lamelle nach Anspruch 7, **dadurch gekennzeichnet, dass** die Ringhälften (7, 8, 34) jeweils einen der strömungstechnisch voneinander getrennten Kanäle (4, 5, 30, 31) aufweisen.

9. Lamelle nach einem der vorangehenden Ansprüche, **dadurch gekennzeichnet, dass** der Grundkörper (2) bzw. die Ringhälften (7, 8, 34) aus zwei in axialer Richtung (17) miteinander verbindbaren Lamellenhälften (9, 10) gebildet sind.

10. Lamelle nach Anspruch 7, **dadurch gekennzeichnet, dass** die Lamellenhälften (9, 10) lösbar miteinander verbunden sind.

11. Lamelle nach einem der vorangehenden Ansprüche, **dadurch gekennzeichnet, dass** der Grundkörper (2) aus Aluminium und/oder einer Aluminiumlegierung gebildet ist sowie mit einer säurefesten Beschichtung versehen ist.

12. Lamelle nach Anspruch 11, **dadurch gekennzeichnet, dass** der Grundkörper (2) einen Reibbelagträger (21) aus Stahl, insbesondere Edelstahl aufweist.

13. Lamelle nach einem der vorangehenden Ansprüche, **dadurch gekennzeichnet, dass** die Reibfläche (11) von einem Reibbelag (3) aus einem Composite- oder Karbon-Keramik-Werkstoff bereitgestellt ist.

14. Lamelle nach einer der vorangehenden Ansprüche, **dadurch gekennzeichnet, dass** in dem Grundkörper (2) Reibbelagträger (21) aus einem keramischen Werkstoff eingesetzt sind.

15. Lamelle nach Anspruch 14, **dadurch gekennzeichnet, dass** die Reibbelagträger durch insbesondere gewellte Rohre strömungstechnisch verbunden sind.

16. Bremse mit zumindest einer äußeren Lamelle (1, 29, 32, 33) nach einem der vorangehenden Ansprüche, **gekennzeichnet durch** eine innere Lamelle (6) aus Keramik, insbesondere Faserkeramik.

17. Verfahren zur Herstellung einer Lamelle (1, 29, 32, 33) nach einem der Ansprüche 1 bis 15, **dadurch gekennzeichnet, dass** der Grundkörper (2) additiv, insbesondere durch Laserschmelzen und/oder Lasersintern gebildet wird, insbesondere einstückig gebildet wird.
